# EUROPEAN PATENT SPECIFICATION

(11) **EP 2 657 201 B1**
(45) Date of publication and mention of the grant of the patent: **20.09.2017**
(21) Application number: 12460017.2
(22) Date of filing: 23.04.2012
(51) Int. Cl.: C03C 17/00

(54) **DEVICE USED FOR SPRAY COATING THE HOT GLASSWARE**
VORRICHTUNG ZUR SPRÜHBESCHICHTUNG HEISSER GLASMATERIALIEN
DISPOSITIF UTILISÉ POUR REVÊTEMENT PULVÉRISÉ DE VERRERIE À CHAUD

(43) Date of publication of application: 30.10.2013
(73) Proprietor: CIECH Vitrosilicon, 68-120 Ilowa (PL)
(72) Inventor: Szeszo, Dobieslaw, 68-130 Gozdnica (PL); Pichniarczyk, Pawel, 32-087 Bibice (PL); Zelazowska, Elzbieta, 30-836 Krakow (PL); Zawila, Jozef, 30-837 Krakow (PL); Sacha, Sebastian, 32-852 Debno (PL); Karp, Sylwester, 97-200 Tomaszów Mazowiecki (PL); Trobos, Brtlomiej, 97-213 Smardzewice (PL)
(74) Representative: Piatkowska, Elzbieta

(56) References cited:
- GB-A- 1 211 006
- US-A- 3 516 811
- US-A- 4 002 143
- US-A- 4 220 118
- US-A- 4 425 868
- US-A- 4 668 268
- DATABASE WPI Week 197233 Thomson Scientific, London, GB; AN 1972-52127T XP002684174, -& DD 90 612 A (ZAKLAD BANDAN I DOSWIADCZ) 12 June 1972 (1972-06-12)
- SCHUSTER M ET AL: "Glass Coatings solutions for the protection of glass bottles", VERRE, INSTITUT DU VERRE, PARIS, FR, vol. 15, no. 1, 1 February 2009 (2009-02-01), pages 29-31, XP001548627, ISSN: 0984-7979

## Description

This invention relates to a device used for spray coating the hot glassware, which are transported on a belt conveyor.

A device used for spray coating the hot glassware especially bottles is known, as described in Patent Specification US 4 425 868. Newly formed bottles are carried by belt conveyor, through a treatment tunnel situated above it, in which they are coated with liquid coating agent. Inside the coating tunnel, next to its side walls, there are spraying heads with spraying nozzles mounted opposite and located alongside the tunnel. There are two spray heads at each of the side walls of the tunnel. Spray head unit, situated at one of the tunnel sides, is moved along its axis, against the spray head unit, mounted at the opposite side of the tunnel. Exhaust fan is attached to the upper part of the tunnel. A similar apparatus is known from patent specification DD 90612, according to which liquid coating agent filling the storage box is fed through intermediate box to spraying nozzle at the inlet of the coating tunnel. Spray nozzle is powered with compressed air from appropriate system connection. Location of side walls and ceiling wall is adjustable in this apparatus, and hence it is possible to limit the working tunnel clearance.
According to the invention the device used for spray coating the hot glassware, connected to the belt conveyor of the glassware and equipped with a processing tunnel which is located above the conveyor belt, whereas inside the processing tunnel there are spraying heads with spraying nozzles mounted opposite at side walls of the processing tunnel and arranged along its axis in such a way that at each of the side walls of the processing tunnel there are spraying heads, while the set of spraying heads, located at one side of the processing tunnel, is shifted along its axis against the set of spraying heads located at the opposite wall of the processing tunnel, and the end sections of the processing tunnel are fitted with adjustable diaphragms and connected to the induced draught fan, *characterized in that* the processing tunnel has at least one side mixing chamber, open towards its interior and equipped with a mixing fan, and is also equipped with at least one tank filled with a liquid coating-forming agent, connected to the device controlling its weight and connected to the spraying heads. The processing tunnel has got on both its sides two mixing chambers one to another relatively shifted according to the axis in the distance **(D)** corresponding to mutual shift by a distance **(d)** of opposite spraying heads. The device has two tanks with a coating-forming agent, which are placed on the checking and they are situated at a distance from the conveyor of the glassware, whereas the connection of both tanks with spaying heads is made by flexible cables.

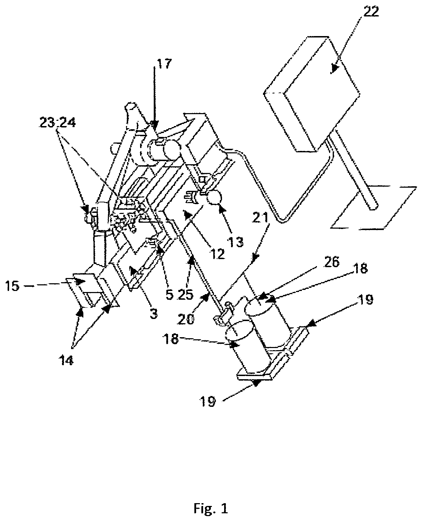

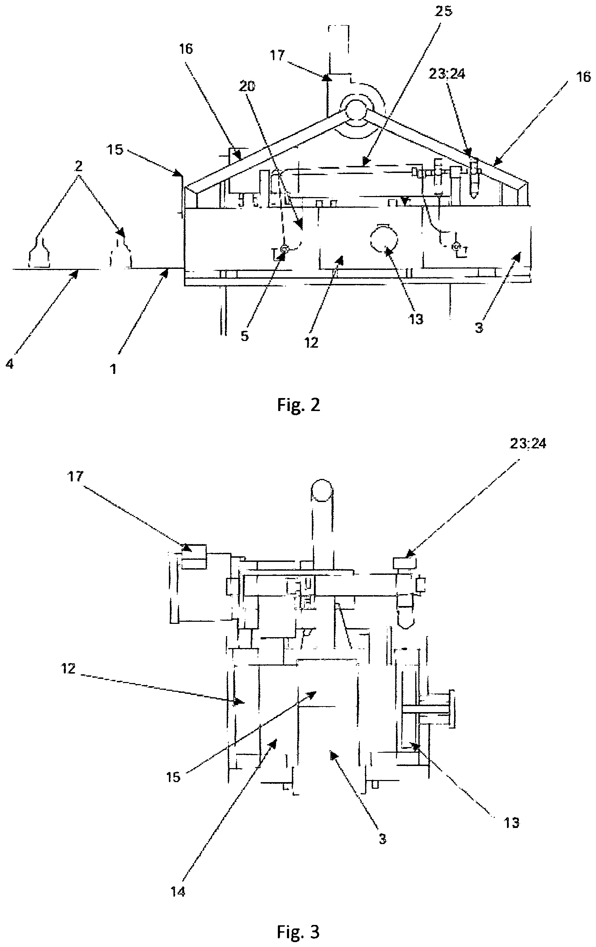

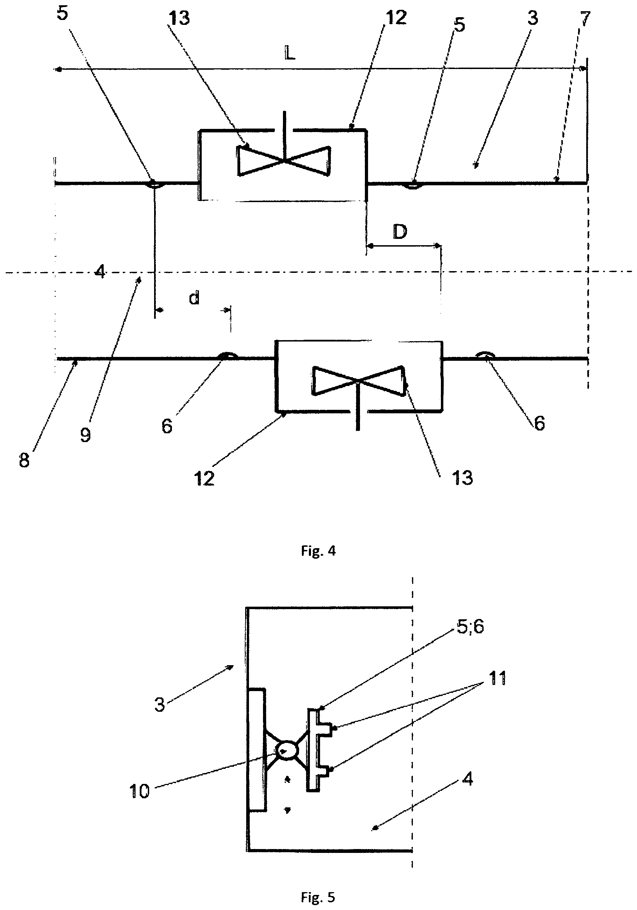

The device used for spray coating the hot glassware is shown in the executive example, which Figure 1 shows a perspective view of the device, Figure 2 - a lateral view of the device, Figure 3 - its front view of the inlet side, Figure 4 shows the horizontal section of the processing tunnel and Figure 5 tunnel - a section of its cross-section.

The device of the present invention is related to the belt conveyor **1** of hot glassware **2** and equipped with the processing tunnel **3,** which is located above the conveyor belt **4** of the belt conveyor **1.** Inside the processing tunnel **3** there are two sets of spraying heads **5** and **6** installed, mounted opposite each other at the side walls **7, 8** of the processing tunnel. At each of the side walls **7, 8** of the processing tunnel **3** there are placed in series along its axis **9** two spraying heads **5** or **6.** The set of spraying heads **5,** placed at a side wall **7** of the processing tunnel **3,** is shifted along its axis **9** relative to the set of spraying heads **6,** located at the opposite side wall **8.** The oppositely located sets of spraying heads **5, 6**, which are mutually shifted by a distance **d,** are mutually shifted by a distance **L** of the processing tunnel **3.** The spraying heads **5** and **6** are pivotally mounted in the horizontal and vertical direction, wherein each of them is mounted on a ball joint **10,** attached to the side wall **7** or **8** of the processing tunnel **3.** Each spraying head **5, 6** is fitted with a pair of spraying nozzles **11** with a diameter of 0.7 to 1.4 mm. The processing tunnel **3** has on the sides two oppositely located mixing chambers **12,** which are open towards its interior, and each of which is equipped with a mixing fan **13.** Both mixing chambers **12** together with the mixing fans **13** are shifted relatively to each other along the axis **9** by a distance **D,** which corresponds to the mutual shift **d** of the opposite sets of the spraying heads **5** and **6.** On each end section of the processing tunnel **3** there is a set of adjustable diaphragms, consisting of two side diaphragms located opposite each other **14** and one upper diaphragm **15.** The diaphragms **14, 15** are intended to reduce the air gap clearance of the processing tunnel **3** according to the outline of the moving glassware **2.** The end sections of the processing tunnel **3** are also connected with two wires **16** to the induced draught fan **17.** The device of the invention is equipped with two pressurized tanks **18,** filled with a liquid coating-forming agent. The tanks **18** are placed on the scales **19,** automatically controlling their weight, and they are situated at a distance from the belt conveyor **1.** Each of the tanks **18** is connected by a flexible cable **20** with the spraying heads **5, 6.** The device is also equipped with a compressed air connection **21** and a freestanding power supply and electrical control cabinet **22,** which is located at a distance from the belt conveyor **1.** The connection **21** is linked to the compressed air network, not shown in Figure, and it is equipped with the filter **23** and a pressure-reducing valve **24.** The connection **21** and its ports **25, 26** are made up of flexible cables and linked to the spraying heads **5** and **6,** as well as to the tanks **18.**

Hot glassware **2** are transported on the conveyor belt **4** of the belt conveyor **1** and moved continuously through the processing tunnel **3.** The interior of the processing tunnel **3** is filled with the sprayed coating-forming agent, which is supplied under pressure from one of the two tanks **18** and sprayed through nozzles **11** of the spraying heads **5, 6.** During operation of the mixing fans **13** inside the mixing chambers **12** the sprayed coating-forming agent is being mixed with the air and converted into the mist, which settles on the hot surfaces of glassware **2** and forms a uniform coating on the glassware. The induced draught fan **17** expels from the inside of the processing tunnel **3** the excess of a coating-forming agent and resulting flue gas.

### The list of markings

- 1: - belt conveyor
- 2: - glassware
- 3: - processing tunnel
- 4: - conveyor belt
- 5: - spraying head
- 6: - spraying head
- 7: - side wall
- 8: - side wall
- 9: - axis
- 10: - ball joint
- 11: - spraying nozzle
- 12: - mixing chamber
- 13: - mixing fan
- 14: - side diaphragm
- 15: - upper diaphragm
- 16: - wire
- 17: - induced draught fan
- 18: - tank
- 19: - checking scales
- 20: - flexible cable
- 21: - compressed air connection
- 22: - power supply and electrical control cabinet
- 23: - filter
- 24: - valve
- 25: - connection port
- 26: - connection port
- d: - distance
- D: - distance
- L: - length

## Claims

1. The device used for spray coating the hot glassware, connected to the belt conveyor of the glassware and equipped with a processing tunnel which is located above the conveyor belt, whereas inside the processing tunnel there are spraying heads with spraying nozzles mounted opposite at side walls of the processing tunnel and arranged along its axis in such a way that at each of the side walls of the processing tunnel there are at least two spraying heads, while the set of spraying heads, located at one side of the processing tunnel, is shifted along its axis against the set of spraying heads located at the opposite wall of the processing tunnel, and the end sections of the processing tunnel are fitted with adjustable diaphragms and connected to the induced draught fan, ***characterized in that*** the processing tunnel **(3)** has at least one side mixing chamber **(12),** open towards its interior and equipped with a mixing fan **(13),** and is also equipped with at least one tank **(18)** filled with a liquid coating-forming agent, connected to the device controlling its weight and connected to the spraying heads **(5, 6).**

2. The device according to claim 1, ***characterized in that*** the processing tunnel **(3)** has got on both its sides two mixing chambers **(12)** one to another relatively shifted according to the axis **(9)** in the distance **(D)** corresponding to mutual shift by a distance **(d)** of opposite spraying heads **(5, 6).**

3. The device according to claim 1, ***characterized in that*** it has two tanks **(18)** with a coating-forming agent, which are placed on the checking **(19)** and they are situated at a distance from the conveyor **(1)** of the glassware **(2),** whereas the connection of both tanks **(18)** with spaying heads **(5, 6)** is made by flexible cables **(20).**

## Patentansprüche

1. Vorrichtung zur Spritzbeschichtung von heißen Glaserzeugnissen, angeschlossen an einen Bandförderer für die Glaserzeugnisse und ausgestattet mit einem Bearbeitungstunnel, der oberhalb des Transportbands des Bandförderers installiert wird und ausgerüstet mit Spritzköpfen mit Spritzdüsen, die jeweils gegenüberliegend an den Seitenwänden montiert und entlang der Achse so aufgereiht sind, dass an jeder Seitenwand des Bearbeitungstunnels mindestens zwei Spritzdüsen montiert sind, dabei sind die Spritzdüsen an der einen Wand des Bearbeitungstunnels entlang der Achse im Vergleich zu den Spritzdüsen an der gegenüberliegenden Wand des Bearbeitungstunnels verschoben und die Endbereiche des Bearbeitungstunnels sind mit regulierbaren Blenden und einem angeschlossenen Abzugsventilator ausgerüstet, ***gekennzeichnet dadurch,* dass** der Bearbeitungstunnel **(3)** verfügt über mindestens eine seitliche Mischkammer **(12),** nach innen offen und mit einem Mischventilator **(13)** ausgestattet, sowie über mindestens einen mit einem Beschichtungsmittel gefüllten Behälter **(18)** ausgestattet ist, der an eine Kontrollwage und Spritzdüsen angeschlossen ist **(5, 6).**

2. Vorrichtung nach Patentanspruch 1, ***gekennzeichnet dadurch,* dass** der Bearbeitungstunnel **(3)** verfügt an den Seiten über zwei Mischkammern **(12),** die entlang der Achse **(9)** um den Abstand **(D)** verschoben sind, wobei dieser Abstand der Verschiebung **(d)** der gegenüberliegenden Spritzköpfe **(5, 6)** entspricht.

3. Vorrichtung nach Patentanspruch 1, ***gekennzeichnet dadurch,* dass** sie zwei Behälter **(18)** mit Beschichtungsmittel umfasst, die an Kontrollwaagen **(19)** angebracht sind und sich in einem gewissen Abstand vom Bandförderer **(1)** für die Glaserzeugnisse **(2)** befinden, wobei die beiden Behälter **(18)** über flexible Kabel **(20)** mit den Spritzköpfen **(5, 6)** verbunden sind.

## Revendications

1. Le dispositif utilisé pour revêtir par pulvérisation à chaud des produits en verre, lié au convoyeur à bande des produits en verre et équipé du tunnel de traitement qui est situé au-dessus de la bande de convoyeur et doté de têtes de pulvérisation avec les buses de pulvérisation, fixées à l'opposite, contre ses parois latérales et emplacées le long de son axe de façon que contre chaque paroi latérale du tunnel de traitement il y a au moins deux têtes de pulvérisation sachant que le groupe de têtes de pulvérisation, placé contre une paroi du tunnel de traitement, est déplacé le long de son axe par rapport au groupe de têtes de pulvérisation, placé contre la paroi opposée du tunnel de traitement, et les parties distales du tunnel de traitement sont dotées de diaphragmes ajustables et du ventilateur de tirage connecté, ***se caratérisant en ce que*** son tunnel de traitement **(3)** a au moins une caisse de mélange latérale **(12)** ouverte vers son intérieur et dotée du ventilateur de mélange **(13)** et il est doté aussi d'au moins un réservoir **(18)** rempli d'un agent formateur de rêvetement, connecté au dispositif de contrôle de son poids et connecté aux têtes de pulvérisation **(5, 6).**

2. Le dispositif selon la revendication 1, ***se caratérisant en ce que*** le tunnel de traitement **(3)** a deux caisses de mélange à ses côtés **(12)** qui sont réciproquement déplacées le long de son axe **(9)** de la distance **(D),** correspondant au déplacement réciproque **(d)** de groupes de têtes de pulversiation opposés **(5, 6).**

3. Le dispositif selon la revendication 1 ***se caratérisant en ce qu'***il a deux réservoirs **(18)** avec un agent formateur de rêvetement qui sont placés sur les balances de contrôle **(19)** et sont situées à une distance du convoyeur **(1)** des produits en verre **(2),** sachant que la connexion de deux réservoirs **(18)** avec les têtes de pulvérisation **(5, 6)** est formée à l'aide des conduits flexibles **(20).**
